# EUROPEAN PATENT APPLICATION

(11) **EP 4 810 825 A1**
(43) Date of publication of application: **23.09.2026**
(21) Application number: 24880825.5
(22) Date of filing: 24.10.2024
(51) Int. Cl.: F16H 25/20, E21B 33/064, E21B 33/06

(54) **SYSTEM FOR SUBSEA BLOWOUT PREVENTER ACTUATION USING HYDRAULIC AND/OR ELECTROMECHANICAL ENERGY**

(30) Priority: 26.10.2023 BR 102023022424
(71) Applicant: Petroleo Brasileiro S.A. - PETROBRAS, 20031-912 Rio de Janeiro (BR); Serviço Nacional de Aprendizagem Industrial, CEP: 41770-395 Salvador- BA (BR)
(72) Inventor: SIQUEIRA FETTER VANNI, Guilherme, 21941-915 Rio de Janeiro (BR); TOBIO CLARO, Rafael, 40150-000 Salvador (BR); SOARES TALARICO, José Vitor, 41100-060 Salvador (BR); SANTANA DOS SANTOS, Leonardo, 41650-470 Salvador (BR); MENEZES CALDAS, Gabriel, 41940-010 Salvador (BR); MIRANDA ROCHA, Lidiane, 41510-237 Salvador (BR); ROMERO ALBINO, Juan Carlos, 41650-195 Salvador (BR); LOPES DO CARMO, Rodrigo Luis, 42802-902 Camaçari (BR); ESTEVÃO BEAL, Valter, 41680-113 Salvador (BR); COLOMBO, Danilo, 21941-915 Rio de Janeiro (BR); NASCIMENTO BARROS, Rafael, 41110-010 Salvador (BR); RODRIGUES TORRES, Tiago, 41720-370 Salvador (BR); MARTINEZ OHMS NETO, Ramon, 41830-590 Salvador (BR); SILVA LUZ, Mateus, 41250-520 Salvador (BR); MARQUES DE O. A. SOUZA, Sara, 42706-110 Lauro de Freitas (BR); DA SILVA FELIPE, Gabriel, 21941-915 Rio de janeiro (BR); WERGNE DE CASTRO ARAÚJO FILHO, Frederico, 41600-120 Salvador (BR)
(74) Representative: Clarke, Modet y Cía., S.L.
(86) International application number: PCT/BR2024/050487
(87) International publication number: WO 2025/085988

(57) **Abstract**

This is a direct subsea actuation system on the BOP drawer (18) by means of a closed hydraulic circuit, through the actuation of an electric motor (1) which by means of coupling (3) and speed reducer (2) actuates a linearly static concentric spindle (4), and a nut (5), connected to a plate (7), which transforms rotary motion of the motor into linear motion passed by means of piston rods (9) to a plunger (10), following a logic of opening and closing the BOP drawers (18) by transferring hydraulic fluid to the BOP preventer, while the purely electromechanical system has the same concept, however with rods (9) being connected to a secondary plate (20), in its turn connected to the preventer through the drawer rod (23), performing the linear motion directly in that drawer.

## Description

### INTRODUCTION

The present invention patent relates to a system for effecting the operation of the Blowout Preventer, hereinafter referred to as BOP, using electromechanical and/or hydraulic transmission means, actuating the rod of the BOP drawer itself, in order to increase the reliability of the equipment in the case of using the electromechanical transmission system, directly associated with the rod of the BOP drawer. In the case of using the hydraulic system, it will be closed, when actuated, by connecting the rod of the electromechanical transmission system to a piston of a hydraulic cylinder, configuring a single device, with said hydraulic unit submerged.

### FIELD OF THE INVENTION

The present invention has its field of application in ultra-deep offshore operations, reaching up to 4,000 m of water column.

### BACKGROUND OF THE INVENTION

Currently, the actuation method for BOP preventers is performed in a multiplexed/hydraulic manner, using complex systems involving valves, pumps, hydraulic fluids, shuttle valves, and function control and monitoring systems. As it is a vital safety device for well drilling operations, the BOP has redundant systems to increase its operational reliability, which involves the use of hydraulic accumulators located in the equipment, directly impacting its dimensions and mass.

There are several BOP models on the market that have hydraulically actuated gate preventers and annular preventers. Preventers are the main components of a BOP and must follow a series of technical requirements and best practices to ensure well safety. The main manufacturers of BOP preventers are: Shaffer^{®} (National Oilwell Varco), Cameron, and Hydril^{®} (GE Oil & Gas). Although today there is a range of casings that vary according to the type of application (land and sea), internal diameter dimensions and working pressures, the models that are usually used in offshore well drilling were considered for the research, in general evaluated, have an internal diameter of 18.3/4" and working pressures of 10,000 psi to 20,000 psi.

These devices are operated by applying pressure by hydraulic fluid to a double-acting cylinder, which moves a plunger, which in its turn pushes or returns the casing, performing its operation. This fluid, in normal operation, is provided by the platform to recharge the accumulators, and in emergencies, the BOP uses only the hydraulic fluid accumulators to perform the fundamental operations in the event of an emergency disconnection, for example. When it comes to electric BOPs and their preventers, although they are not yet commercially available, there are already some works developed in international companies, with the main inventors being Electrical Subsea & Drilling^{®} a Noble Drilling Services INC^{®}.

### STATE OF THE ART

The current state of the art includes some patent documents concerning electromechanical preventers, such as US 20150008000, entitled "POWER ACTUATOR DEVICE AND METHOD FOR SUBMERGED USE AT PETROLEUM EXPLOITATION" - it activates a shear gate or similar device in a submerged system, such as a Blowout Preventer, used in oil exploration, characterized by having an electric motor coupled to a set of planetary screw and nut type screws for transmitting rotary motion into linear motion. It allows the movement of 4 flanges, which in its turn are connected to a plate and a central shaft connected to the BOP gate, performing the opening and closing movement of the same. The above document has several moving parts, which in a way increases its volume, constructive complexity and susceptibility to unscheduled maintenance. Furthermore, in this prior art document, it was necessary to develop a set of solutions to allow the use of only one spindle arranged concentrically to the system cylinder, through the use of radial rods instead of a rod axially arranged on the plate, directly impacting the system dimensions. The need for mechanical transmission elements, such as gears, increases the probability of equipment failure related to these items.

The document WO 2016053111, entitled "BLOW-OUT PREVENTER" - discloses a new type of BOP for pipe shearing and not the development of a new electromechanical actuator. This document addresses the different types of shapes of the moving plate parts. Thus, document WO 2016053111 focuses on describing a blowout prevention device and its constituent elements, not a BOP actuator system. Furthermore, the gears shown in the aforementioned patents are all integral to the BOP, which means a complete replacement of all already installed BOPs.

The document authored by Beal *et al*. (BEAL, V. E.; CLARO, R. T.; DE MELO ARAÚJO, M.; COLOMBO, D.; SOUZA, M. S. Challenges for the Development of New Bop Generation. Offshore Technology Conference 2019. OTC-29680-MS. Brazil, 29 to 31 October. 6p.) does not disclose any technological solution, it only shows the challenges and a suggestion for a life cycle analysis regarding the challenges of BOP technology development.

The document US 20120312548, entitled - IN-BORE BLOWOUT PREVENTER METHOD AND APPARATUS - is indicated for low-complexity BOPs, although this definition is not clear in the document. The document discloses a method, a system, and equipment. It describes several previous designs of blades for BOPs, and the well construction process. The document addresses automatic BOP operations for production trees in a low-cost environment and, also, reports the closure of production lines by compressing springs when the nominal closing pressure is exceeded, probably to protect some downstream production equipment due to a failure in the operation of the production platform, similar to a DHSV (Down Hole Safety Valve). Regarding the drilling BOP, it discusses a spring mechanism that would be integral to the drill string, apparently like a sub, which would automatically isolate the annular space of the well. Given that this document does not apply to the BOP itself, but to the drill string. However, the application does not describe how the seal between the sub and the previous casing and between the sub and the open hole formation will be guaranteed.

The document CN 111441737, entitled "DOUBLE-ROTARY-BARREL DOUBLE-PLUNGER SLIDING KEY TYPE SHAFT-PLUG CORE THREE-IN-ONE BLOWOUT PREVENTER", is a utility model for a BOP and does not disclose an electromechanical and/or hydraulic actuation system for the BOP.

EP 2812530, entitled "DEVICE IN A SUBSEA ELECTROMECHANICAL ACTUATOR AND METHOD FOR USE OF A SUBSEA ELECTROMECHANICAL ACTUATOR", deals with an electric annular preventer. It claims an electromechanical actuator for subsea use, aimed at the oil industry. It consists of an electric motor, including a stator and rotor that move the actuator element between two positions. It can be used as an annular preventer, connector, or even as a linear actuator.

The document above requires significantly more space for the application of the concept than the space required by the concept shown. In addition, there is a need for a more in-depth intervention in the equipment currently used, including the BOP body, making a possible retrofitting process more difficult.

The electric preventive device described in the document WO 2017120101 A1, entitled "PRESSURE ASSISTED MOTOR OPERATED RAM ACTUATOR FOR WELL PRESSURE CONTROL DEVICE", concerns the use of two electric motors coupled to a worm gear system, where the axes are perpendicular and the rotation is transmitted through gears, allowing the transformation of rotary motion into linear motion, performing the transmission of motion to the drawer.

In relation to the document above, the main advantage obtained is in the axial arrangement of the elements of the concept being proposed, which has as its main characteristic a significantly reduced space requirement compared to this state of the art. Furthermore, because it has a direct connection from the motor to the spindle, without the use of gears or additional transmission elements, the probability of failure of these elements, which can be catastrophic for the system, is eliminated.

US 20120234117, entitled "SUBSEA ELECTRIC ACTUATORS AND LATCHES FOR THEM" - shows an electric actuator composed of an electric motor, gearbox and reduction gears, transmitting rotational motion into linear motion through a telescopic drive. It also contemplates return through the use of a spring.

There is also a preventer on the market called K-BOS, which uses a pyromechanical system to perform the actuation. The patents found relating to this product are described below. It has unique characteristics that differentiate it from all material currently found on the market. It has an asymmetrical structure. It is capable of shearing and sealing immediately everything in the well, using the kinetic energy from the action of explosives, through a controlled detonation.

The document US 8567427B1 entitled "Blowout preventers using plates propelled by explosive charges" - concerns the concept of a single-block BOP, with only one cavity, containing a blade coupled to a plate, which in its turn is coupled to an explosive charge capable of moving it when activated. A cavity on the opposite side of the blade serves to keep the drawer in the required position, as well as to lock and seal the passage of fluids from the well.

The document CN 109138898 entitled "Blowout preventer shearing blade based on cumulative blasting cutting" - deals with a shearing drawer embedded with explosives in a waterproof compartment, using components to ensure a safe and controlled explosion.

In the two previous documents, only one closing action is possible, requiring the BOP to be returned to the surface for maintenance and reactivation for a new operation, leading to high resource consumption and greater equipment downtime.

The document US 20150198004, entitled "ELECTROMAGNETIC ACTUATOR FOR A BLOWOUT PREVENTER", discusses an electromagnetic actuation method, with magnets arranged along a portion of the rods and housings opposite the actuation hole. These sets of magnets would be responsible for transforming the magnetic field energy generated by electromagnets to move the drawer.

In addition to actuators and electric motors, a material was found that can be used in the BOP to perform the drawer closing function. Shape Memory Alloy (SMA) are alloys that have the ability to deform when subjected to temperature variations. Due to this characteristic, nickel-titanium (NiTi) alloys have gained prominence in the offshore field, as they exhibit excellent mechanical and electrical properties and high corrosion resistance.

Within the research on shape memory alloys, the patent document US 9127696 entitled "Shape memory alloy powered hydraulic accumulator" was found, where this element would be associated with a hydraulic assembly, composed of an accumulator for fluid storage that has a piston, in addition to a plurality of shape memory alloy wires, configured to perform the axial movement of the piston within the cylinder. It also has a controller configured to adjust the amount of electrical current available to the wires.

The patent document AU 2013343453 entitled "Subsea actuating device and system for actuating hydraulically operated well tools" - concerns a subsea actuating device for operating tools or functions through the use of hydraulic fluid. It comprises a fluid-filled cylinder, in addition to a piston, electric motor and drive shaft and transmission element. This system is connected to a rotary motion-to-linear motion conversion system. This converter may include a planetary roller screw. The biggest difference with respect to the device to be presented in this document is in the arrangement of the transmission elements. In this case, since the screw is performing the linear displacement of the system, more space is needed for it to move linearly, thus becoming a possibly longer device. The other significant difference is in the piston rod. In the case of the patent under analysis, the screw is the rod of the system itself, using a hollow tube-type transmission system from the reducer to the nut to perform the rotary motion. This nut, supported by bearings, transforms the rotary motion of the reducer into the linear motion of the screw.

### DISADVANTAGES OF THE STATE OF THE ART

In summary, the state of the art has the following most preponderant technical disadvantages and limitations:
- The use of hydraulic systems as they are currently in the BOP leaves the equipment susceptible to a very high probability of leakage, due to the numerous hydraulic connections, lines, valves, and other components. The biggest problem currently encountered is precisely that these leaks can culminate in a system operational failure, jeopardizing not only the integrity of the well, but also the platform itself and its occupants, as well as the environment;
- The equipment currently used has a not very good reliability history, which is another deficiency. In addition, the installation, de-installation, and maintenance times and costs are high. As a consequence of this slower and more costly maintenance, there is low equipment availability. Associated with the relatively low operational reliability, it is clear that the risks involved are high, leading to a need to improve the technology used in the equipment;
- By removing the hydraulic system from the platform, installation and dismantling time is saved, as well as the elimination of problems caused by leaks in that system. Using a closed hydraulic system, the chances of leaks are much lower, increasing the reliability of equipment operation due to the use of a much smaller number of components. When using the equipment without the hydraulic system, connected directly to the BOP drawer, all hydraulic components of the drive system are eliminated, also increasing the reliability of equipment operation;
- The system developed with only one screw/nut assembly aims to reduce the moving parts of the system, bringing an improvement in both the size and reliability of the equipment, since there are fewer components that are likely to fail. It was necessary to develop a set of solutions to allow the screw to be used concentrically to the system cylinder, through the use of radial rods instead of a rod axially arranged on the plate, directly impacting the dimensions of the system.

### OBJECTIVES OF THE INVENTION

The objective of the present invention is to eliminate the number of hydraulic components in the system currently used in the BOP, or to reduce them in the case of using an electromechanical system associated with a hydraulic system, while maintaining its main structures through retrofitting.

The objective of the present invention, in the case of adopting the completely electromechanical solution, is to eliminate the hydraulic systems from the system, and consequently the problems related to them, mainly leaks in the hydraulic lines and connections, which can lead to loss of equipment functions.

The objective of the present invention, as a consequence of using a closed hydraulic system, is to eliminate the need for hydraulic lines running from the platform to the equipment, which directly impacts the riser assembly, currently the main reason for the long installation and dismantling time of the BOP at the wellhead.

The objective of the present invention is to increase the reliability of the equipment through the use of components and equipment with greater operational reliability, in addition to the reduction and/or elimination of hydraulic components and systems.

### ADVANTAGES OF THE INVENTION

In summary, the invention being claimed has the following most preponderant advantages:
- Significant reduction and/or elimination of hydraulic system connections and components;
- High rate of reuse of the current BOP structure (retrofitting);
- Increased system reliability;
- Easier maintenance due to the significant reduction of system components, both in the purely electromechanical system and in the hybrid system;
- Easier equipment installation at the wellhead due to the elimination of hydraulic lines from the platform to the equipment through the risers;
- Elimination of the installations required on the platform for controlling, mixing, pumping and monitoring of the hydraulic fluid used in the BOP.

### SUMMARY OF THE INVENTION

The present patent application relates to a direct subsea actuation system in the BOP (Blowout Preventer) drawer, either through a closed hydraulic circuit via the connection of the rod of the electromechanical transmission system to a plunger of a hydraulic cylinder or in a constructive variation with purely electromechanical technology.

The electromechanical system has a constructive simplicity capable of increasing the reliability of the equipment by eliminating hydraulic components currently used in the BOP, due to the simplification of the system and the use of electromechanical components and equipment with greater reliability. In addition, there is a significant positive impact on the assembly and disassembly process of the riser, since the rigid hydraulic lines (rigid conduits) that currently run from the platform to the equipment will no longer be necessary. The numerous surface hydraulic accumulators, as well as the submerged ones existing in the equipment currently used in the oil industry, will also no longer be necessary, as being disclosed in the state of the art.

The electromechanical system consists of an electric motor associated with a coupling to transmit rotation to a speed reducer, this reducer being associated with a screw. This screw, associated with a nut attached to a plate, will transform the rotary motion of the screw into linear motion of the nut, pushing a set of rods, which in its turn are fixed to the aforementioned plate. These rods, also bolted to a second plate, will transfer the linear movement from the plate to a rod, and this is directly connected to the BOP drawer, performing its movement and consequently the shearing and/or closure of the well.

For cases where the BOPs cannot be completely changed, or the operator intends to use the same measurement units as the original BOP system, the system described above is associated with a hydraulic actuator, which has the function of a driving piston, generating hydraulic power in a communicating vessel system, performing the hydraulic closure of the preventer. The hydraulic configuration is indicated for situations where it is not possible to completely remove the hydraulic system for any reason. In this case, the equipment will be connected to the BOP actuators through hydraulic lines, transferring the fluid from the corresponding chambers in these two actuators. The system has a similar operation to a positive displacement pump.

In the configuration above, the system rods are connected to a plunger arranged in a hydraulic cylinder. This plunger pushes a hydraulic fluid, transferring it through hydraulic lines to the BOP actuator currently used in the oil industry (state of the art). Any linear movement generated by the spindle/nut movement will be transmitted directly to the plunger and, consequently, transferring fluid to the hydraulic actuator of the BOP preventer.

### DESCRIPTION OF THE FIGURES

The invention will be described below in its embodiment, and for better understanding, reference will be made to the attached drawings, in which the following are represented:
FIGURE 1: Perspective view of the system for subsea actuation of a blowout preventer using hydraulic and/or electromechanical energy, hydraulic configuration.
FIGURE 2: Exploded perspective view of the system for subsea actuation of a blowout preventer using hydraulic and/or electromechanical energy, hydraulic configuration.

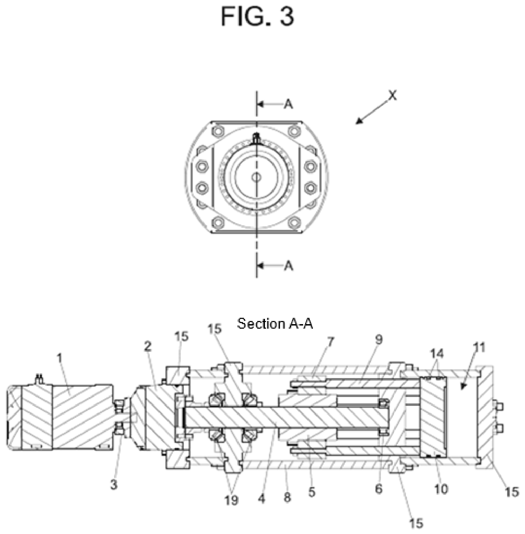

FIGURE 3: Side view in section of the system for subsea actuation of a blowout preventer using hydraulic and/or electromechanical energy, hydraulic configuration.

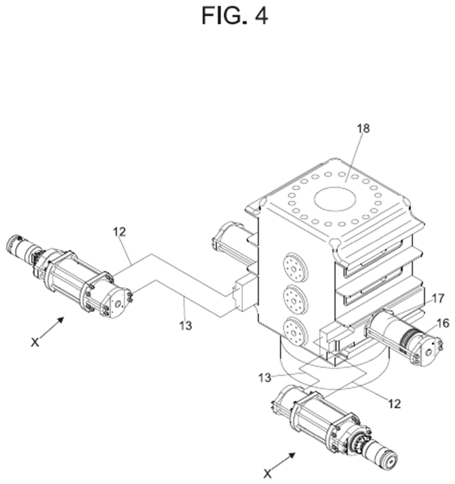

FIGURE 4: Perspective view of the system for subsea actuation of a blowout preventer using hydraulic and/or electromechanical energy, hydraulic configuration showing use in a BOP.

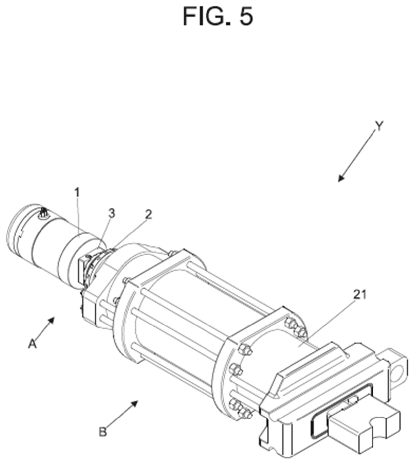

FIGURE 5: Perspective view of the system for subsea actuation of a blowout preventer using hydraulic and/or electromechanical energy, electromechanical configuration.

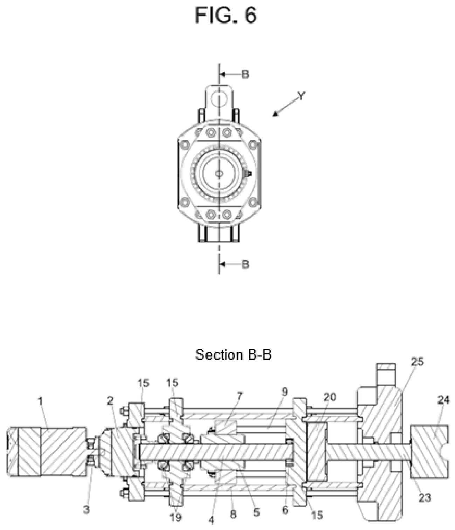

FIGURE 6: Side view in section of the system for subsea actuation of a blowout preventer using hydraulic and/or electromechanical energy, electromechanical configuration.

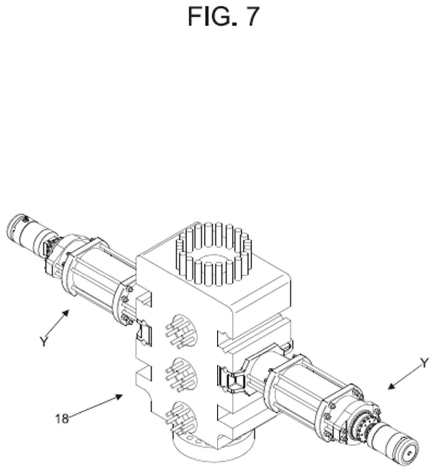

FIGURE 7: Perspective view of the system for subsea actuation of a blowout preventer using hydraulic and/or electromechanical energy, electromechanical configuration showing use in a BOP.

### DETAILED TECHNICAL DESCRIPTION OF THE INVENTION

"SYSTEM FOR SUBSEA ACTUATION OF BLOWOUT PREVENTER USING HYDRAULIC AND/OR ELECTROMECHANICAL ENERGY", deals with a system for direct subsea actuation of the BOP drawer (18) by means of a closed hydraulic circuit, through the actuation of an electric motor (1) which, by means of coupling (3) and speed reducer (2), actuates a linearly static concentric spindle (4), and a nut (5), connected to a plate (7), which transforms the rotary motion of the motor into linear motion passed through rods (9) from the piston to a plunger (10), following a logic of opening and closing the BOP drawers (18) through the transfer of hydraulic fluid to the BOP preventer, while the purely electromechanical system presents the same concept, however with rods (9) being connected to a secondary plate (20), in its turn connected to the preventer via the drawer rod (23), performing the linear movement directly in that drawer (24).

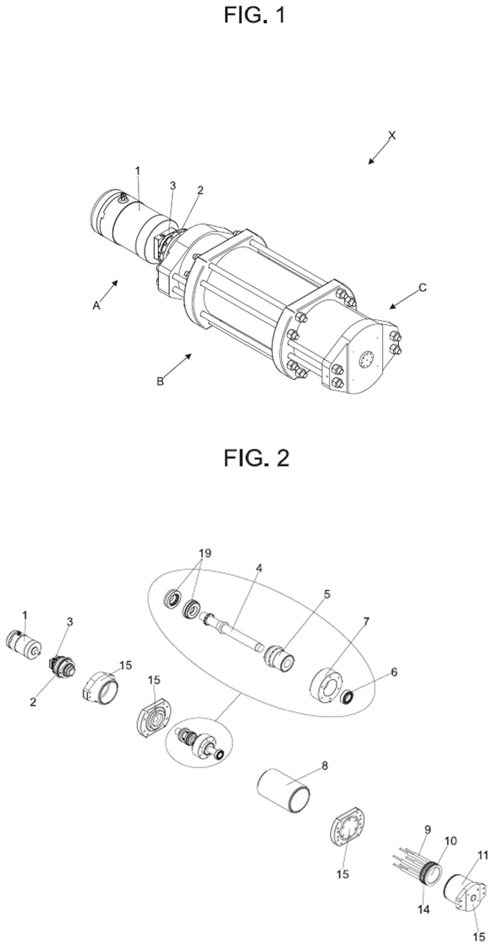

More particularly, the subsea BOP actuation system (18), in the hydraulic configuration (X) consists of a drive subsystem (A) compatible with subsea environment composed of an electric motor (1), speed reducer (2) and a coupling (3) (Figure 2); a transmission subsystem (B) composed of a concentric spindle (4), a nut (5), radial support bearing (6), axial bearing (19), plate (7) and spindle housing (8) and finally a hydraulic subsystem (C) composed of piston rods (9), a plunger (10), a primary cylinder (11), a return line (12), an advance line (13), seals (14), housing covers (15), advance chamber (16) and return chamber (17).

The hydraulic system operates from an activation performed on the platform for the use of any BOP (18) preventive device. A command signal will be sent by a PLC (programmable logic controller) to one or more inverters and/or soft starters, activating the electric motor (1) and initiating its operation. From the rotation of the electric motor (1), its shaft, which is connected to the speed reducer (2) through a coupling (3), will rotate, and through its reduction ratio, it will multiply the torque and reduce the rotation, according to the activated preventive device. In a preferred configuration, the speed reducer (2) is planetary, in order to make the system more compact. The connection of the concentric screw shaft (4) will be made directly to the output of the speed reducer (2), which may have different connections, whether by keys, splined shaft, connecting sleeve, etc. Consequently, all the rotational movement will be transferred to the concentric screw (4). The concentric spindle (4) is supported on the radial bearing (6), being axially fixed by means of axial bearings (19). Due to this arrangement, the concentric spindle (4) will be linearly fixed, only allowing its rotation, and all reaction loads generated in the system will be supported by the axial bearings (19), in order to protect the rest of the system. From the rotary movement of the concentric spindle (4), there will be a transmission of this movement to the nut (5), due to the existence of a coupling similar to that of a screw and nut. It is important to emphasize that the nut (5) is fixed in relation to its rotary motion, allowing it to move linearly as the concentric spindle (4) rotates. Since the nut (5) is fixed to the plate (7) by screws, there is a transfer of this linear motion from the nut (5) to the plate (7). Since the plate (7) is coupled to the piston rods (9), the linear motion generated by the nut (5) is transmitted directly to the hydraulic subsystem (C) through said piston rods (9). These piston rods (9) are arranged radially so that there is no interference between them and the center of the plate (7) where the concentric spindle (4) is located. This allows the system to be more compact. At this moment, the mechanical energy of the linear motion is transformed into potential energy in the hydraulic subsystem (C), since the piston rods (9) are coupled to the plunger (10), which, when activated, will push the hydraulic fluid out of the primary cylinder (11), transferring this fluid through the advance line (13) to the corresponding advance chamber (16) in the hydraulic actuator of the BOP (18). At the same time, hydraulic fluid will be admitted into the primary cylinder (11) through the return line (12), since the fluid will be transferred from the corresponding return chamber (17) in the hydraulic actuator of the BOP (18) to the primary cylinder (11), characterizing a closed hydraulic system. The piston rods (9) will be sealed so that fluid from the hydraulic chamber does not leak into the interior of the spindle housing (8). After transferring the required volume of fluid to fill the advance chamber (16) of the BOP hydraulic actuator (18), the system will continue to be "forced" to move until it reaches the necessary actuation pressures of the BOP gates (18). When these pressures are reached, the system can be switched off, since the transmission subsystem (B) is self-locking due to the use of concentric spindles (4). In addition, when the gate actuation is complete, it will be locked using the same locking mechanism currently in the BOP actuator (18), since there will be no modification to this equipment.

After the equipment actuation for well control or when the functional test of the preventer is completed, it will be necessary to return it to continue the activities carried out in the well, whether drilling or maintenance. In this case, there will be an actuation on the platform to open the preventer: the electric motor (1) will receive a command signal to operate in reverse rotation, which will make the entire system work exactly as explained above, but with its movement reversed. After being opened, the system will be ready to operate again when needed.

The purely electromechanical actuation system shows the same concept described above, obviously without the hydraulic subsystem (C) and with the addition of some components such as, for example, the secondary plate (20) and its respective housing (21).

The operation of the purely electromechanical system (Y) is identical to the hydraulic system, that is, from an actuation performed on the platform, a command signal will go from the PLC to the frequency inverter and/or soft starter, which will control the operation of the electric motor (1). This electric motor (1), as already mentioned, is associated through the use of a coupling (3) to a speed reducer (2). In a way of making the invention feasible, preferably, the coupling (3) is of the elastic type, and the speed reducer (2) is planetary. The concentric spindle (4) is connected to the speed reducer (2) via its shaft end, which may be splined, keyed, or using another known connection method. Thus, it can be inferred that when the electric motor (1) rotates, this rotation is transmitted to the concentric spindle (4). To allow its rotation, this concentric spindle (4) is supported by at least one radial bearing (6). Furthermore, it is axially fixed in both directions using axial bearings (19). These axial bearings (19) are responsible for supporting all the loads involved in the operating principle of the equipment, as well as allowing the concentric spindle (4) to rotate under high axial load. The concentric spindle (4) is connected to a nut (5), which is a planetary roller nut (5) in a preferred configuration. Because they have a nut and bolt connection, the rotary motion of the concentric spindle (4) will be transformed into linear motion of the nut (5). This nut (5) is attached via screws to a plate (7), which in its turn, unlike the concept indicated earlier, is associated via the rods (9) of the plate to a secondary plate (20), and not to a plunger (10) of a hydraulic cylinder. As this secondary plate (20) is connected to the rod (23) of the drawer, any and all linear movement performed by the concentric screw (4) / nut (5) assembly will be transmitted, as explained, to the drawer (24) of the BOP (18), performing its linear displacement and consequently closing the well, having the capacity to cut any pipe present in the well, if necessary. The covers (15) of the enclosures perform the closing and preservation of the internal system of the equipment, together with the enclosures (8) of the concentric screw (4) and the secondary plate (20). The cover (25) of the BOP (18) aims to connect the system directly in the position where the hydraulic system of the BOP (18) is currently installed.

To open the well, after operating conditions have been normalized, the PLC will send another signal for the system to function. In this case, the electric motor (1) will be running in reverse rotation, as will the entire system. After opening, the equipment will be available to perform other operations, if necessary.

## Claims

1. SYSTEM FOR SUBSEA ACTUATION OF BLOWOUT PREVENTER USING HYDRAULIC AND/OR ELECTROMECHANICAL ENERGY, **characterized by** comprising a drive subsystem compatible with subsea environment composed of an electric motor (1) whose shaft is connected to the speed reducer (2) through a coupling (3); the connection of the concentric screw shaft (4) is made directly to the output of the speed reducer (2); the concentric screw (4) is supported on the radial bearing (6), being axially fixed by means of axial bearings (19); from the rotary movement of the concentric screw (4), there will be a transmission of this movement to the nut (5); the nut (5) is fixed by means of screws to the plate (7) which transfers the linear movement to it; the plate (7) is coupled to the piston rods (9), which causes the linear movement generated by the nut (5) to be transmitted directly to the hydraulic subsystem (C); the piston rods (9) are coupled to the plunger (10).

2. SYSTEM FOR SUBSEA ACTUATION OF BLOWOUT PREVENTER USING HYDRAULIC AND/OR ELECTROMECHANICAL ENERGY, according to claim 1, **characterized in that**, in a preferred assembly, the speed reducer (2) is planetary.

3. SYSTEM FOR SUBSEA ACTUATION OF BLOWOUT PREVENTER USING HYDRAULIC AND/OR ELECTROMECHANICAL ENERGY, according to claim 1, **characterized in that** the concentric spindle (4) is fixed in relation to its linear movement, allowing only its rotation.

4. SYSTEM FOR SUBSEA ACTUATION OF BLOWOUT PREVENTER USING HYDRAULIC AND/OR ELECTROMECHANICAL ENERGY, according to claim 1, **characterized in that** the piston rods (9) are radially arranged, so that there is no interference between them and the center of the plate (7) where the concentric spindle (4) is located.

5. SYSTEM FOR SUBSEA ACTUATION OF BLOWOUT PREVENTER USING HYDRAULIC AND/OR ELECTROMECHANICAL ENERGY, according to claim 1, **characterized by** transformation of the mechanical energy of the linear motion into potential energy in the hydraulic subsystem (C).
5- SYSTEM FOR SUBSEA ACTUATION OF BLOWOUT PREVENTER USING HYDRAULIC AND/OR ELECTROMECHANICAL ENERGY, according to claim 1, **characterized in that** when the plunger (10) is activated it pushes the hydraulic fluid out of the primary cylinder (11), transferring this fluid through the advance line (13) to the corresponding advance chamber (16) in the hydraulic actuator of the BOP (18); at the same time hydraulic fluid will be admitted into the primary cylinder (11) through the return line (12), since the fluid will be transferred from the corresponding return chamber (17) in the hydraulic actuator of the BOP (18) to the primary cylinder (11), characterizing the closed hydraulic system.

6. SYSTEM FOR SUBSEA ACTUATION OF BLOWOUT PREVENTER USING HYDRAULIC AND/OR ELECTROMECHANICAL ENERGY, according to claims 1 and 5, **characterized in that** the piston rods (9) are sealed.

7. SYSTEM FOR SUBSEA ACTUATION OF BLOWOUT PREVENTER USING HYDRAULIC AND/OR ELECTROMECHANICAL ENERGY, according to claim 1, **characterized in that** after the transfer of the necessary volume of fluid to fill the advance chamber (16) of the hydraulic actuator of the BOP (18), the system will continue to be "forced" to move until it reaches the necessary actuation pressures of the BOP (18) drawers.

8. SYSTEM FOR SUBSEA ACTUATION OF BLOWOUT PREVENTER USING HYDRAULIC AND/OR ELECTROMECHANICAL ENERGY, according to claims 1 and 7, **characterized in that** when the pressures are reached, the system can be switched off, since the transmission subsystem (B) is self-locking due to the use of concentric spindles (4).

9. SYSTEM FOR SUBSEA ACTUATION OF BLOWOUT PREVENTER USING HYDRAULIC AND/OR ELECTROMECHANICAL ENERGY, according to claim 1, **characterized in that** in the operation of the purely electromechanical system (Y), the rods (9) of the plate are connected to a secondary plate (20).

10. SUBMARINE ACTUATION OF BLOWOUT PREVENTER SYSTEM USING HYDRAULIC AND/OR ELECTROMECHANICAL ENERGY, according to claim 9, **characterized in that** the secondary plate (20) is connected to the rod (23) of the gate, any and all linear movement performed by the concentric screw (4) / nut (5) assembly will be transmitted to the gate (24) of the BOP (18), performing its linear displacement and consequently closing the well.
